# EUROPEAN PATENT APPLICATION

(11) **EP 4 822 778 A1**
(43) Date of publication of application: **14.10.2026**
(21) Application number: 24900298.1
(22) Date of filing: 16.10.2024
(51) Int. Cl.: H01M 4/485, C01G 31/02, H01M 4/62, H01M 4/131, H01M 10/0562, H01M 10/0565

(54) **NEGATIVE ELECTRODE ACTIVE MATERIAL AND BATTERY**

(30) Priority: 05.12.2023 JP 2023205702
(71) Applicant: Panasonic Intellectual Property Management Co., Ltd., Kadoma-shi, Osaka 571-0057 (JP)
(72) Inventor: SHINODA, Kaori, kadoma-shi, Osaka 571-0057 (JP); TANAKA, Yoshiaki, kadoma-shi, Osaka 571-0057 (JP); MIYAZAKI, Akinobu, kadoma-shi, Osaka 571-0057 (JP)
(74) Representative: Grünecker Patent- und Rechtsanwälte PartG mbB
(86) International application number: PCT/JP2024/036756
(87) International publication number: WO 2025/121002

(57) **Abstract**

The negative electrode active material of the present disclosure includes Li, V, M, and O, wherein M is at least one selected from tetravalent metal elements, excluding V, and tetravalent metalloid elements, and wherein the electronic conductivity is greater than or equal to 7.0 × 10⁻¹³ S/cm.

## Description

### Technical Field

The present disclosure relates to a negative electrode active material and a battery.

### Background Art

Patent Literature 1 discloses a nonaqueous secondary battery using Li₃VO₄ as a negative electrode active material.

### Citation List

### Patent Literature

PTL 1: Japanese Unexamined Patent Application Publication No. 2008-77847

### Summary of Invention

### Technical Problem

There has been a demand in the art for improving the charge-discharge efficiency of a battery using a lithium vanadium oxide as a negative electrode active material.

An object of the present disclosure is to provide a negative electrode active material and a battery, which enable an improvement in the charge-discharge efficiency of a battery.

### Solution to Problem

A negative electrode active material in one aspect of the present disclosure comprises Li, V, M, and O, wherein M is at least one selected from tetravalent metal elements, excluding V, and tetravalent metalloid elements, and wherein the electronic conductivity is greater than or equal to 7.0 × 10⁻¹³ S/cm.

### Advantageous Effects of Invention

According to the negative electrode active material of the present disclosure, the charge-discharge efficiency of a battery can be improved.

### Brief Description of Drawings

[Fig. 1] Fig. 1 is a schematic cross-sectional view showing a negative electrode material according to a second embodiment.
[Fig. 2] Fig. 2 is a schematic cross-sectional view showing an example configuration of a battery according to a third embodiment.
[Fig. 3] Fig. 3 is a schematic cross-sectional view showing another example configuration of a battery according to the third embodiment.
[Fig. 4] Fig. 4 is a schematic cross-sectional view showing a press molding die used for evaluating the electronic conductivity of a negative electrode active material.
[Fig. 5] Fig. 5 is a graph showing measurement results of a charge-discharge test for batteries using the negative electrode active materials of Examples 1 to 3 and Comparative Example 1.

### Description of Embodiments

### (Finding Underlying the Present Disclosure)

The present inventors, through their intensive studies on a cause that hinders the improvement of the charge-discharge efficiency of a battery using a negative electrode active material comprising a lithium vanadium oxide, have found that a sufficient charge-discharge efficiency cannot be achieved when the negative electrode active material has an electronic conductivity lower than a certain value. The finding has led to the present disclosure.

Embodiments of the present disclosure will now be described with reference to the drawings. It should be noted that the present disclosure is not limited to the following embodiments.

### (First Embodiment)

A negative electrode active material according to a first embodiment comprises Li, V, M, and O. M is at least one selected from tetravalent metal elements, excluding V, and tetravalent metalloid elements. The electronic conductivity of the negative electrode active material is greater than or equal to 7.0 × 10⁻¹³ S/cm. A battery using the negative electrode active material having this feature can have an improved charge-discharge efficiency.

The electronic conductivity of the negative electrode active material according to the first embodiment may be greater than or equal to 8.0 × 10⁻¹¹ S/cm. A battery using the negative electrode active material having this feature can achieve a good energy density and good input/output characteristics. The electronic conductivity of the negative electrode active material according to the first embodiment may be less than or equal to 1.0 × 10⁻² S/cm, or may be less than or equal to 1.0 × 10⁻⁶ S/cm. The electronic conductivity of the negative electrode active material is a value as measured when no additional component, which will increase the electronic conductivity, has been added to the negative electrode active material. Examples of the additional component, which will increase the electronic conductivity, include carbon coated on the surface of the negative electrode active material, and a conductive additive attached to the surface of the negative electrode active material.

The negative electrode active material according to the first embodiment has, for example, a composition represented by compositional formula (1): Li₃₊ₓV₁₋ₓMₓO₄, where 0 < x < 1 is satisfied. This feature facilitates insertion and desorption of Li into and from the negative electrode active material, resulting in an increase in the capacity of a battery using the negative electrode active material. The content x of M may satisfy 0 < x ≤ 0.2. This feature further increases the capacity of a battery using the negative electrode active material. The content x of M may be in the range of 0 < x < 0.1. This feature further increases the capacity of a battery using the negative electrode active material. The content x of M may be in the range of 0 < x < 0.08. This feature further increases the capacity of a battery using the negative electrode active material.

Li may be contained in excess such that its content deviates from the composition ratio of compositional formula (1). Specifically, Li may be contained in excess within a range of less than or equal to 30% based on the Li composition ratio of compositional formula (1). The excessive Li may be incorporated into a β phase and/or a γ phase, which are crystal phases of a lithium vanadium oxide constituting the negative electrode active material, or may exist as a crystal phase other than the β phase and/or the γ phase. This feature further increases the capacity of a battery using the negative electrode active material.

M can be selected from tetravalent metal elements, excluding V, and tetravalent metalloid elements. M is, for example, at least one selected from the group consisting of Ti, Zr, Si, Ge, and Sn. This feature is likely to maintain a high theoretical capacity of the negative electrode active material. M may comprise Ti. This feature is more likely to maintain a high theoretical capacity of the negative electrode active material. M may be Ti. This feature is more likely to maintain a high theoretical capacity of the negative electrode active material.

The negative electrode active material according to the first embodiment may include both the β phase and the γ phase as crystal phases.

The β phase is a crystal phase which can be formed in the lithium vanadium oxide and which has a crystal structure belonging to space group Pmn2₁. In particular, the crystal structure of the β phase includes tetrahedra composed of LiO₄ (hereinafter simply referred to as "LiO₄ tetrahedra") and tetrahedra composed of VO₄ (hereinafter simply referred to as "VO₄ tetrahedra"). In the crystal structure of the β phase, the LiO₄ tetrahedra and the VO₄ tetrahedra are oriented in the same direction (the c-axis direction, which is the direction of one side of the crystal lattice) with adjacent tetrahedra sharing a vertex. The β phase has a high theoretical capacity as a negative electrode active material. On the other hand, the β phase has a high expansion/contraction rate associated with insertion and desorption of Li into and from the crystal phase.

The γ phase is a crystal phase which can be formed in the lithium vanadium oxide and which has a crystal structure belonging to space group Pcmn. In particular, the crystal structure of the γ phase, like the crystal structure of the β phase, includes LiO₄ tetrahedra and VO₄ tetrahedra. In the γ phase, the LiO₄ tetrahedra and the VO₄ tetrahedra exist such that tetrahedra generally oriented in one direction (the +c-axis direction, which is one direction of one side of the crystal lattice) and tetrahedra generally oriented in the opposite direction (the -c-axis direction, which is the opposite direction of the one side of the crystal lattice) each account for about half. In the crystal structure of the γ phase, each LiO₄ tetrahedron shares vertices and one side with an adjacent LiO₄ tetrahedron, while each VO₄ tetrahedron shares a vertex with an adjacent LiO₄ or VO₄ tetrahedron. The γ phase can be stably obtained by partially substituting V (vanadium) sites in the crystal lattice with a tetravalent metal other than V. The γ phase has a low expansion/contraction rate associated with insertion and desorption of Li into and from the crystal phase. On the other hand, the γ phase reduces the theoretical capacity of the lithium vanadium oxide as a negative electrode active material.

When the negative electrode active material according to the first embodiment includes both the β phase and the γ phase, the active material can maintain both the high theoretical capacity, which is an advantage of the β phase, and the low expansion/contraction rate, which is an advantage of the γ phase.

In the negative electrode active material according to the first embodiment, the ratio of the amount of substance of V to the sum of the amount of substance of V and the amount of substance of M (V/(M + V)) is, for example, greater than 0% and less than 10%. This feature is likely to form a mixed phase of the β phase and the γ phase. When the heat treatment temperature during the production of the negative electrode active material is high, the γ phase is likely to be formed. When a low-melting material is selected as a raw material for the negative electrode active material, the γ phase is likely to be formed at a lower heat treatment temperature. Thus, the volume ratio between the β phase and the γ phase can be controlled by appropriately selecting the ratio of the amount of substance of V to the sum of the amount of substance of V and the amount of substance of M, the heat treatment temperature during the production of the negative electrode active material, and the types of raw materials for the negative electrode active material.

The volume ratio between the β phase and the γ phase is not limited. The volume ratio between the β phase and the γ phase correlates with the results of X-ray diffraction measurement of the negative electrode active material; thus, the results of X-ray diffraction measurement can be a measure of the volume ratio between the β phase and the γ phase. It should be noted in this regard that the intensity of a diffraction peak represents the height of the diffraction peak and does not indicate the area or volume of the β phase or the γ phase. For example, in an X-ray diffraction pattern as measured using Cu-Kα rays as a radiation source, the ratio of the intensity of a diffraction peak assigned to the (101) plane of the β phase to the intensity of a diffraction peak assigned to the (011) plane of the γ phase is greater than or equal to 0.1 and less than or equal to 10.0. The diffraction peak intensity ratio may be greater than or equal to 0.1 and less than or equal to 7.0. When the diffraction peak intensity ratio is within such a range, the use of the negative electrode active material can achieve a battery having good charge-discharge characteristics.

The diffraction peak assigned to the (101) plane of the β phase appears at 22.7° ± 0.2°, taking into account a change in the lattice constant of the β phase due to doping with an M element. Similarly, the diffraction peak assigned to the (011) plane of the γ phase appears at 22.4° ± 0.2°, taking into account a change in the lattice constant of the γ phase due to doping with an M element. Thus, in an X-ray diffraction pattern as measured using Cu-Kα rays as a radiation source, instead of the above-described condition on the diffraction peak intensity ratio, the ratio of the intensity of a diffraction peak appearing at a diffraction angle 2θ of 22.7° ± 0.2° to the intensity of a diffraction peak appearing within a diffraction angle 2θ range of 22.4° ± 0.2° may be greater than or equal to 0.1 and less than or equal to 10.0. When two diffraction peaks exist in an overlapping angle of "greater than or equal to 22.5° and less than or equal to 22.6°", which is common to "22.4° ± 0.2°" and "22.7° ± 0.2°" in terms of the diffraction angles 2θ, the correspondence between the diffraction peaks and the crystal planes is determined in consideration of the relative magnitudes of the intensities of other comparable planes of the β phase and the γ phase. Further, the diffraction peak assigned to the (011) plane of the γ phase tends to appear at 22.4° ± 0.1°, and the diffraction peak assigned to the (101) plane of the β phase tends to appear at 22.7° ± 0.1°. Therefore, in an X-ray diffraction pattern as measured using Cu-Kα rays as a radiation source, the ratio of the intensity of a diffraction peak appearing at a diffraction angle 2θ of 22.7° ± 0.1° to the intensity of a diffraction peak appearing within a diffraction angle 2θ range of 22.4° ± 0.1° may be greater than or equal to 0.1 and less than or equal to 10.0. The diffraction peak intensity ratio may be greater than or equal to 0.1 and less than or equal to 7.0.

The shape of the negative electrode active material according to the first embodiment is not limited. Examples of the shape include a needle-like shape, a spherical shape, and an ellipsoidal shape. The negative electrode active material according to the first embodiment may be particles, or may be formed in a pellet shape or a plate-like shape.

When the shape of the negative electrode active material according to the first embodiment is particulate (e.g., spherical), the negative electrode active material may have a median diameter of greater than or equal to 0.1 µm and less than or equal to 100 µm, or may have a median diameter of greater than or equal to 0.5 µm and less than or equal to 10 µm. This enables good dispersion of the negative electrode active material according to the first embodiment and other materials. The median diameter of particles herein refers to a particle size (d50) corresponding to a cumulative volume of 50% in a volume-based particle size distribution. The volume-based particle size distribution can be measured by a laser diffraction measuring apparatus or an image analyzer.

### <Method for Producing Negative Electrode Active Material>

The negative electrode active material according to the first embodiment can be produced by the following method.

Raw material powders are prepared such that they will produce a negative electrode active material having the intended composition. Examples of the raw material powders include an oxide, a hydroxide, a carbonate, a nitrate, or an organic salt of Li; an oxide, a hydroxide, a carbonate, a nitrate, or an organic salt of V; and an oxide, a hydroxide, a carbonate, a nitrate, or an organic salt of M.

Assume, for example, that in the negative electrode active material having a composition represented by the compositional formula (1): Li₃₊ₓV₁₋ₓMₓO₄, M is Ti and, upon mixing of the raw materials, x is 0.05. Li₂CO₃, V₂O₅, and TiO₂ are mixed at a molar ratio of Li₂CO₃ : V₂O₅ : TiO₂ = (3.05/2) : (0.95/2) : 0.05. Lithium hydroxide or a hydrate thereof may be used instead of Li₂CO₃.

A reaction product is obtained by heat-treating the mixture of the raw material powders. The atmosphere during the heat treatment may be an air atmosphere or an inert gas atmosphere. The inert atmosphere is, for example, an argon atmosphere or a nitrogen atmosphere. The raw material mixture may be heat-treated in a reducing atmosphere. The reducing atmosphere is, for example, an ammonia atmosphere, a methane atmosphere, or a hydrogen sulfide atmosphere. The heating rate during the heat treatment of the raw material mixture is, for example, greater than or equal to 1°C/min and less than or equal to 10°C/min. The cooling rate during the heat treatment of the raw material mixture is, for example, greater than or equal to 1°C/min and less than or equal to 10°C/min. The electronic conductivity of the negative electrode active material tends to be higher as the raw materials for the negative electrode active material are heat-treated at a higher temperature.

The negative electrode active material may also be obtained by causing the mixture of the raw material powders to react with each other mechanochemically (by a mechanochemical milling method) in a mixing apparatus such as a planetary ball mill. The negative electrode active material according to the first embodiment can be obtained by the above-described methods.

The molar ratio upon mixing of the raw materials is not necessarily identical to the molar ratio of the reaction product. This is because some of the raw materials, e.g. due to their evaporation during the reaction, may not be fully incorporated into the reaction product.

Therefore, the compositional parameter x of the negative electrode active material is determined by, for example, ICP emission spectroscopy, atomic absorption spectrometry, or an EPMA (Electron Probe Micro Analyzer) method.

### (Second Embodiment)

A second embodiment will now be described. A description of those matters which have been described with reference to the first embodiment will be omitted as appropriate.

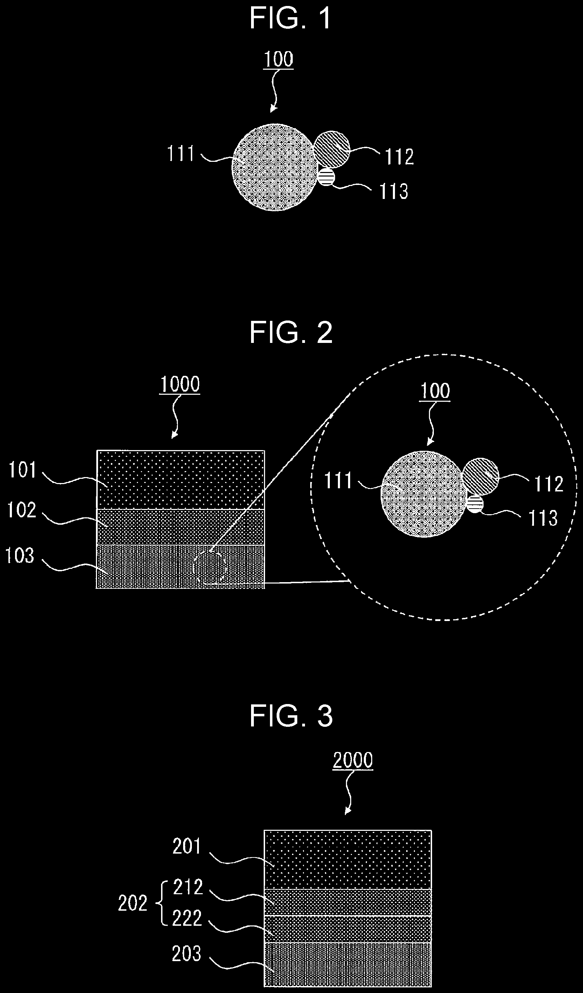

Fig. 1 shows a negative electrode material 100 according to the second embodiment. The negative electrode material 100 includes a negative electrode active material 111 and a solid electrolyte 112. The negative electrode material 100 may include a conductive additive 113 for the purpose of increasing the electronic conductivity. Each of the negative electrode active material 111, the solid electrolyte 112, and the conductive additive 113 is, for example, in particulate form. The negative electrode active material 111 comprises the negative electrode active material according to the first embodiment. As described above, the negative electrode active material according to the first embodiment has an electronic conductivity greater than or equal to a certain level.

The negative electrode active material 111 may comprise, as a main component, the negative electrode active material according to the first embodiment. The phrase "comprise, as a main component, the negative electrode active material according to the first embodiment" means that the component contained in the largest amount by mass ratio is the negative electrode active material according to the first embodiment. The negative electrode active material 111 may consist solely of the negative electrode active material according to the first embodiment.

The conductive additive 113 may be provided such that it covers at least part of the negative electrode active material 111. This can increase the contact area between the conductive additive 113 and the negative electrode active material 111. Accordingly, when the negative electrode material 100 is used in a battery, the resistance of the battery can be reduced, resulting in an increase in the output of the battery.

The ratio of the volume of the conductive additive 113 to the sum of the volume of the negative electrode active material 111 and the volume of the conductive additive 113 may be greater than or equal to 0.01 and less than or equal to 0.4.

Since the negative electrode material 100 according to the second embodiment comprises the negative electrode active material according to the first embodiment, the use of the negative electrode material 100 can provide a negative electrode appropriate for improving the charge-discharge efficiency of a battery.

### (Third Embodiment)

A third embodiment will now be described. A description of those matters which have been described with reference to the first embodiment and the second embodiment will be omitted as appropriate.

Fig. 2 shows a battery 1000 which is an example of the third embodiment. The battery 1000 includes a positive electrode 101, an electrolyte layer 102, and a negative electrode 103. The electrolyte layer 102 is disposed between the positive electrode 101 and the negative electrode 103.

The positive electrode 101 includes a positive electrode active material and a solid electrolyte.

The electrolyte layer 102 includes an electrolyte material. The electrolyte material is, for example, a solid electrolyte material.

The negative electrode 103 includes a negative electrode active material 111 and a solid electrolyte 112.

The negative electrode active material 111 is particles comprising the negative electrode active material according to the first embodiment. The negative electrode active material 111 may be particles comprising, as a main component, the negative electrode active material according to the first embodiment. The "particles comprising, as a main component, the negative electrode active material according to the first embodiment" refer to particles in which the component contained in the largest amount by mass ratio is the negative electrode active material according to the first embodiment. The negative electrode active material 111 may be particles consisting solely of the negative electrode active material according to the first embodiment.

The negative electrode active material 111 may have a median diameter of greater than or equal to 0.1 µm and less than or equal to 100 µm. When the negative electrode active material 111 has a median diameter of greater than or equal to 0.1 µm, the negative electrode active material 111 and the solid electrolyte 112 can be well dispersed in the negative electrode 103. This improves the charge-discharge characteristics of the battery. When the negative electrode active material 111 has a median diameter of less than or equal to 100 µm, the rate of diffusion of lithium in the negative electrode active material 111 is increased. The battery 1000 can therefore operate at high output.

The negative electrode active material 111 may have a median diameter larger than that of the solid electrolyte 112. This enables good dispersion of the negative electrode active material 111 and the solid electrolyte 112.

In order to increase the energy density and output of the battery 1000, in the negative electrode 103, the ratio of the volume of the negative electrode active material 111 to the sum of the volume of the negative electrode active material 111 and the volume of the solid electrolyte 112 may be greater than or equal to 0.30 and less than or equal to 0.95.

In order to increase the energy density and output of the battery 1000, the negative electrode 103 may have a thickness of greater than or equal to 10 µm and less than or equal to 500 µm.

The solid electrolyte 112 contained in the negative electrode 103 may be a sulfide solid electrolyte, a halide solid electrolyte, an oxide solid electrolyte, or a polymeric solid electrolyte.

In the present disclosure, "sulfide solid electrolyte" refers to a solid electrolyte containing sulfur. "Oxide solid electrolyte" refers to a solid electrolyte containing oxygen. The oxide solid electrolyte may contain an anion other than oxygen (excluding a sulfur anion and a halogen anion). "Halide solid electrolyte" refers to a solid electrolyte containing a halogen element and not containing sulfur. The halide solid electrolyte may contain not only a halogen element but also oxygen.

Examples of the sulfide solid electrolyte include Li₂S-P₂S₅, Li₂S-SiS₂, Li₂S-B₂S₃, Li₂S-GeS₂, Li₃.₂₅Ge₀.₂₅P₀.₇₅S₄, and Li₁₀GeP₂S₁₂.

An example of the halide solid electrolyte is a compound having a composition represented by the compositional formula LiₐMe_{b}Y_{c}X₆, where a + m b + 3 c = 6 and c > 0 are satisfied. Me is at least one selected from the group consisting of metal elements other than Li and Y, and metalloid elements. X is at least one element selected from the group consisting of F, Cl, Br, and I. The value of m represents the valence of Me.

"Metalloid elements" are B, Si, Ge, As, Sb, and Te. "Metal elements" are all elements included in Group 1 to Group 12 of the periodic table (excluding H), and all elements included in Group 13 to Group 16 of the periodic table (excluding B, Si, Ge, As, Sb, Te, C, N, P, O, S, and Se).

In order to increase the ionic conductivity of the halide solid electrolyte, Me may be at least one element selected from the group consisting of Mg, Ca, Sr, Ba, Zn, Sc, Al, Ga, Bi, Zr, Hf, Ti, Sn, Ta, and Nb.

Another example of the halide solid electrolyte is a compound having a composition represented by the compositional formula Li_{α}M_{β}O_{γ}X_{δ}, where α, β, γ, and δ are each a value greater than 0. M is at least one element selected from the group consisting of metal elements other than Li, and metalloid elements. X is at least one element selected from the group consisting of Cl, Br, and I. In the composition of the compound, 0.9 ≤ α ≤ 1.2, β = 1.0, 1.0 ≤ γ ≤ 1.3, and 3.6 ≤ δ ≤ 4.0 are satisfied.

Examples of the oxide solid electrolyte include:
(i) a NASICON-type solid electrolyte such as LiTi₂(PO₄)₃ or an element-substituted product thereof;
(ii) a perovskite-type solid electrolyte such as (LaLi)TiO₃;
(iii) a LISICON-type solid electrolyte such as Li₁₄ZnGe₄O₁₆, Li₄SiO₄, LiGeO₄, or an element-substituted product thereof;
(iv) a garnet-type solid electrolyte such as Li₇La₃Zr₂O₁₂ or an element-substituted product thereof; and
(v) Li₃PO₄ or an N-substituted product thereof.

An example of the polymeric solid electrolyte is a compound of a polymer compound and a lithium salt. The polymer compound may have an ethylene oxide structure. A polymer compound having an ethylene oxide structure can contain a large amount of a lithium salt, and can therefore have a higher ionic conductivity. The polymeric solid electrolyte may be a composite compound of a polyethylene oxide and a lithium salt. An example of such a polymeric solid electrolyte is lithium bis(trifluoromethanesulfonyl)imide.

Examples of the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One lithium salt selected from these may be used alone. Alternatively, a mixture of two or more lithium salts selected from these may be used.

The positive electrode 101 comprises a material capable of occluding and releasing metal ions such as lithium ions. The positive electrode 101 comprises, for example, a positive electrode active material (for example, particles of a positive electrode active material).

Examples of the positive electrode active material include a lithium-containing transition metal oxide, a transition metal fluoride, a polyanion material, a fluorinated polyanion material, a transition metal sulfide, a transition metal oxysulfide, and a transition metal oxynitride. The lithium-containing transition metal oxide is, for example, Li(Ni,Co,Al)O₂, Li(Ni,Co,Mn)O₂, or LiCoO₂.

In the present disclosure, "(A,B,C)" means "at least one selected from the group consisting of A, B, and C".

From the viewpoint of cost and safety of the battery 1000, lithium phosphate may be used as the positive electrode active material.

The positive electrode active material may have a median diameter of greater than or equal to 0.1 µm and less than or equal to 100 µm. When the positive electrode active material has a median diameter of greater than or equal to 0.1 µm, the positive electrode active material and the solid electrolyte can be well dispersed in the positive electrode 101. This improves the charge-discharge characteristics of the battery 1000. When the positive electrode active material has a median diameter of less than or equal to 100 µm, the rate of diffusion of lithium in the positive electrode active material is increased. The battery 1000 can therefore operate at high output.

The positive electrode active material may have a median diameter larger than that of the solid electrolyte. This enables good dispersion of the positive electrode active material and the solid electrolyte.

In order to increase the energy density and output of the battery 1000, in the positive electrode 101, the ratio of the volume of the positive electrode active material to the sum of the volume of the positive electrode active material and the volume of the solid electrolyte may be greater than or equal to 0.30 and less than or equal to 0.95.

A coating layer may be formed on the surface of the positive electrode active material. This can reduce an increase in reaction overvoltage of the battery. A coating material contained in the coating layer is, for example, a sulfide solid electrolyte, an oxide solid electrolyte, a polymeric solid electrolyte, or a halide solid electrolyte.

The coating material may be a halide solid electrolyte material or an oxide solid electrolyte material. The halide solid electrolyte material may contain F. This enhances the stability of the coating material at a high potential. Therefore, the battery 1000 has a high charge-discharge efficiency. The oxide solid electrolyte may be lithium niobate or a polyanion material, which is stability even at a high potential. In this case, the battery 1000 has a high charge-discharge efficiency.

In order to increase the energy density and output of the battery 1000, the positive electrode 101 may have a thickness of greater than or equal to 10 µm and less than or equal to 500 µm.

The solid electrolyte contained in the positive electrode 101 may be a sulfide solid electrolyte, a halide solid electrolyte, an oxide solid electrolyte, a polymeric solid electrolyte, or an organic polymer solid electrolyte.

The electrolyte layer 102 comprises an electrolyte material. The electrolyte material is, for example, a solid electrolyte material. The electrolyte layer 102 may be an electrolyte layer composed of a solid electrolyte. The solid electrolyte material contained in the electrolyte layer 102 may be a sulfide solid electrolyte, a halide solid electrolyte, or a polymeric solid electrolyte.

The electrolyte layer 102 may have a thickness of greater than or equal to 1 µm and less than or equal to 100 µm. When the electrolyte layer 102 has a thickness of greater than or equal to 1 µm, short-circuiting between the positive electrode 101 and the negative electrode 103 is less likely to occur. When the electrolyte layer 102 has a thickness of less than or equal to 100 µm, the battery 1000 can operate at high output.

Fig. 3 shows a battery 2000 which is another example of the third embodiment. In the example of Fig. 3, the battery 2000 includes a positive electrode 201, an electrolyte layer 202, and a negative electrode 203. In this example, the electrolyte layer 202 includes an electrolyte layer 212 (hereinafter referred to as the "first electrolyte layer") which is configured the same as the above-described electrolyte layer 102, and an electrolyte layer 222 (hereinafter referred to as the "second electrolyte layer") provided separately from the electrolyte layer 212. The second electrolyte layer 222 is provided between the first electrolyte layer 212 and the negative electrode 203. For example, the positive electrode 201 and the negative electrode 203 are configured the same as the positive electrode 101 and the negative electrode 103 shown in Fig. 2, respectively.

When the electrolyte layer 202 is composed of the first electrolyte layer 212 and the second electrolyte layer 222, the second electrolyte layer 222 may be composed of a solid electrolyte material which is different from and is more electrochemically stable than that of the first electrolyte layer 212. In particular, the reduction potential of the solid electrolyte material constituting the second electrolyte layer 222 may be lower than the reduction potential of the solid electrolyte material constituting the first electrolyte layer 212. This enables the solid electrolyte material, contained in the first electrolyte layer 212, to be used without its reduction, thus making it possible to improve the charge-discharge efficiency of the battery.

At least one selected from the group consisting of the positive electrode 101, the electrolyte layer 102, and the negative electrode 103, constituting the battery 1000 shown in Fig. 2, may include a nonaqueous electrolyte solution, a gel electrolyte, or an ionic liquid for the purpose of facilitating transfer of lithium ions and improving the output characteristics of the battery. At least one selected from the group consisting of the positive electrode 201, the electrolyte layer 202, and the negative electrode 203, constituting the battery 2000 shown in Fig. 3, may also include a nonaqueous electrolyte solution, a gel electrolyte, or an ionic liquid.

The nonaqueous electrolyte solution comprises a nonaqueous solvent and a lithium salt dissolved in the nonaqueous solvent. Examples of the nonaqueous solvent include a cyclic carbonate ester solvent, a chain carbonate ester solvent, a cyclic ether solvent, a chain ether solvent, a cyclic ester solvent, a chain ester solvent, and a fluorinated solvent. Examples of the cyclic carbonate ester solvent include ethylene carbonate, propylene carbonate, and butylene carbonate. Examples of the chain carbonate ester solvent include dimethyl carbonate, ethyl methyl carbonate, and diethyl carbonate. Examples of the cyclic ether solvent include tetrahydrofuran, 1,4-dioxane, and 1,3-dioxolane. Examples of the chain ether solvent include 1,2-dimethoxyethane and 1,2-diethoxyethane. An example of the cyclic ester solvent is γ-butyrolactone. An example of the chain ester solvent is methyl acetate.

Examples of the fluorinated solvent include fluoroethylene carbonate, methyl fluoropropionate, fluorobenzene, fluoroethyl methyl carbonate, and fluorodimethylene carbonate. One nonaqueous solvent selected from these may be used alone. Alternatively, a mixture of two or more nonaqueous solvents selected from these may be used.

Examples of the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One lithium salt selected from these may be used alone. Alternatively, a mixture of two or more lithium salts selected from these may be used. The concentration of the lithium salt is, for example, in the range of greater than or equal to 0.5 mol/liter and less than or equal to 2 mol/liter.

A polymer material impregnated with a nonaqueous electrolyte solution can be used as the gel electrolyte. Examples of the polymer material include polyethylene oxide, polyacrylonitrile, polyvinylidene fluoride, polymethyl methacrylate, and a polymer having an ethylene oxide linkage.

Examples of cations contained in the ionic liquid include:
(i) an aliphatic chain quaternary salt such as tetraalkylammonium or tetraalkylphosphonium;
(ii) an aliphatic cyclic ammonium cation such as a pyrrolidinium, morpholinium, imidazolinium, tetrahydropyrimidinium, piperazinium, or piperidinium cation; and
(iii) a nitrogen-containing heterocyclic aromatic cation such as a pyridinium or imidazolium cation.

Examples of anions contained in the ionic liquid include PF₆⁻, BF₄⁻, SbF₆⁻, AsF₆⁻, SO₃CF₃⁻, N(SO₂CF₃)₂⁻, N(SO₂C₂F₅)₂⁻, N(SO₂CF₃)(SO₂C₄F₉)⁻, and C(SO₂CF₃)₃⁻.

The ionic liquid may contain a lithium salt.

At least one selected from the group consisting of the positive electrode 101, the electrolyte layer 102, and the negative electrode 103, constituting the battery 1000 shown in Fig. 2, may contain a binder for the purpose of improving the adhesion between particles. At least one selected from the group consisting of the positive electrode 201, the electrolyte layer 202, and the negative electrode 203, constituting the battery 2000 shown in Fig. 3, may also contain a binder.

Examples of the binder include polyvinylidene fluoride, polytetrafluoroethylene, polyethylene, polypropylene, an aramid resin, polyamide, polyimide, polyamide-imide, polyacrylonitrile, polyacrylic acid, polymethyl acrylate, polyethyl acrylate, polyhexyl acrylate, polymethacrylic acid, polymethyl methacrylate, polyethyl methacrylate, polyhexyl methacrylate, polyvinyl acetate, polyvinylpyrrolidone, polyether, polyethersulfone, hexafluoropolypropylene, a styrene-butadiene rubber, and carboxymethyl cellulose. A copolymer may be used as the binder. An example of such a binder is a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. A mixture of two or more selected from the above-described materials may also be used as the binder.

The negative electrode 103, constituting the battery 1000 shown in Fig. 2, may include a conductive additive 113 for the purpose of increasing the electronic conductivity. The negative electrode 203, constituting the battery 2000 shown in Fig. 3, may also include a conductive additive.

Examples of the conductive additive include:
(i) graphite such as natural graphite or artificial graphite;
(ii) carbon black such as acetylene black or Ketjen black;
(iii) conductive fibers such as carbon fibers or metal fibers;
(iv) fluorocarbon;
(v) metal powder such as aluminum powder;
(vi) conductive whiskers such as zinc oxide whiskers or potassium titanate whiskers;
(vii) a conductive metal oxide such as titanium oxide; and
(viii) a conductive polymer compound such as polyaniline, polypyrrole, or polythiophene.

For cost reduction, the conductive additive described in (i) or (ii) above may be used.

The positive electrode 101, constituting the battery 1000 shown in Fig. 2, may include not only the positive electrode active material but also a conductive additive. Examples of materials for the conductive additive are as described above. The positive electrode 201, constituting the battery 2000 shown in Fig. 3, may also include not only the positive electrode active material but also a conductive additive.

In the negative electrode 103 of the battery 1000 shown in Fig. 2, the conductive additive 113 may cover at least part of the surface of the negative electrode active material 111. This increases the contact area between the conductive additive 113 and the negative electrode active material 111, whereby the resistance of the battery can be reduced and the output can be increased. The negative electrode 203 of the battery 2000 shown in Fig. 3 may be configured in the same manner. Also in the positive electrode 101 shown in Fig. 2, the conductive additive may cover at least part of the surface of the positive electrode active material. The positive electrode 201 of the battery 2000 shown in Fig. 3 may be configured in the same manner.

In the negative electrode 103 of the battery 1000 shown in Fig. 2, the ratio of the volume of the conductive additive 113 to the sum of the volume of the negative electrode active material 111 and the volume of the conductive additive 113 may be greater than or equal to 0.01 and less than or equal to 0.4. The negative electrode 203 of the battery 2000 shown in Fig. 3 may be configured in the same manner. Also in the positive electrode 101 of the battery 1000 shown in Fig. 2, the ratio of the volume of the conductive additive to the sum of the volume of the positive electrode active material and the volume of the conductive additive may be greater than or equal to 0.01 and less than or equal to 0.4. The positive electrode 201 of the battery 2000 shown in Fig. 3 may be configured in the same manner.

The negative electrode material 100 shown in Fig. 1 may be included in the negative electrode 103 of the battery 1000 shown in Fig. 2. In order to prevent the solid electrolyte 112 from reacting with the negative electrode active material 111, a coating layer may be formed on the surface of the negative electrode active material 111. This configuration enables the battery 1000 to have a high charge-discharge efficiency. Similarly, the negative electrode material 100 shown in Fig. 1 may be included in the negative electrode 203 of the battery 2000 shown in Fig. 3. In the battery 2000 shown in Fig. 3, a coating layer may be formed on the surface of the negative electrode active material.

A coating material contained in the coating layer is, for example, a sulfide solid electrolyte, an oxide solid electrolyte, a polymeric solid electrolyte, or a halide solid electrolyte.

An example of the sulfide solid electrolyte is Li₂S-P₂S₅. An example of the oxide solid electrolyte is trilithium phosphate. An example of the polymeric solid electrolyte is a composite compound of polyethylene oxide and a lithium salt. An example of such a polymeric solid electrolyte is lithium bis(trifluoromethanesulfonyl)imide.

Examples of the shape of the battery according to the third embodiment include a coin-like shape, a cylindrical shape, a prismatic shape, a sheet-like shape, a button-like shape, a flat shape, and a laminated shape.

The battery according to the third embodiment may be manufactured, for example, by preparing a material for forming a positive electrode, a material for forming an electrolyte layer, and a material for forming a negative electrode, and producing, by a known method, a laminate in which the positive electrode, the electrolyte layer, and the negative electrode are arranged in this order.

### (Other Embodiments)

### (Preface)

The following techniques are disclosed in the above description of embodiments.

### (Technique 1)

A negative electrode active material comprising Li, V, M, and O,
wherein M is at least one selected from tetravalent metal elements, excluding V, and tetravalent metalloid elements, and
wherein the electronic conductivity is greater than or equal to 7 × 10⁻¹³ S/cm.

The negative electrode active material according to the present disclosure has an electronic conductivity of greater than or equal to 7 × 10⁻¹³ S/cm. A battery using the negative electrode active material has an improved charge-discharge efficiency.

### (Technique 2)

The negative electrode active material according to technique 1, having a composition represented by Li₃₊ₓV₁₋ₓMₓO₄, where 0 < x < 1 is satisfied. A battery using such a negative electrode active material has good charge-discharge characteristics.

### (Technique 3)

The negative electrode active material according to technique 2, wherein 0 < x ≤ 0.2 is satisfied. A battery using such a negative electrode active material has better charge-discharge characteristics.

### (Technique 4)

The negative electrode active material according to any one of techniques 1 to 3, wherein M comprises Ti. A battery using such a negative electrode active material has further improved charge-discharge characteristics.

### (Technique 5)

The negative electrode active material according to any one of techniques 1 to 4, wherein the negative electrode active material includes both a β phase and a γ phase as crystal phases. When the negative electrode active material includes both a β phase and a γ phase as crystal phases according to this feature, the use of the negative electrode active material can achieve a battery which satisfies both of capacity and durability.

### (Technique 6)

The negative electrode active material according to any one of techniques 1 to 5, wherein the electronic conductivity is greater than or equal to 8.0 × 10⁻¹¹ S/cm. The use of such a negative electrode active material can achieve a battery having a good energy density and good input/output characteristics.

### (Technique 7)

A battery comprising: a positive electrode; a negative electrode including the negative electrode active material according to any one of techniques 1 to 6; and an electrolyte layer disposed between the positive electrode and the negative electrode. In the thus-configured battery, the negative electrode active material included in the negative electrode has an electronic conductivity of greater than or equal to 7 × 10⁻¹³ S/cm; therefore, the battery has an improved charge-discharge efficiency.

### (Technique 8)

The battery according to technique 7, wherein the negative electrode includes a conductive additive. The inclusion of a conductive additive in the negative electrode can increase the conductivity of the negative electrode.

### EXAMPLES

The present disclosure will now be described in more detail using the following examples and comparative examples. It should be noted that the negative electrode active material and the battery of the present disclosure are not limited to the following examples.

### <EXAMPLE 1>

### [Production of Negative Electrode Active Material]

A negative electrode active material according to Example 1 was produced in the following manner. Li₂CO₃, V₂O₅, and TiO₂ were prepared as raw material powders at a molar ratio of Li₂CO₃ : V₂O₅ : TiO₂ = 1.525 : 0.475 : 0.05. Li₂CO₃ was used in excess by 10% by mass relative to the mass of Li₂CO₃ corresponding to the above molar ratio. These raw material powders were mixed in a mortar to obtain a mixed powder. The mixed powder was pre-fired in air at 600°C for 3 hours. The pre-fired powder was then fired in air at 940°C for 15 hours. The heating was performed at an average rate of 5°C/min, and cooling was performed at an average rate of 3°C/min. In this manner, the negative electrode active material of Example 1 was produced.

### <EXAMPLE 2>

The negative electrode active material of Example 2 was produced in the same manner as in Example 1, except that the firing temperature was changed to 985°C.

### <EXAMPLE 3>

The negative electrode active material of Example 3 was produced in the same manner as in Example 1, except that the firing temperature was changed to 965°C.

### <Comparative Example 1>

Li₂CO₃ and V₂O₅ were prepared as raw material powders at a molar ratio of Li₂CO₃ : V₂O₅ = 1.5 : 0.5. Li₂CO₃ was used in excess by 3% by mass relative to the mass of Li₂CO₃ corresponding to the above molar ratio. The negative electrode active material of Comparative Example 1 was produced by firing the mixed powder in the same manner as in Example 1, except that the firing temperature was changed to 800°C.

### [X-ray Diffraction Measurement]

In a dry atmosphere having a dew point of less than or equal to -45°C, X-ray diffractions of the negative electrode active materials of Examples 1 to 3 and Comparative Example 1 were measured using an X-ray diffractometer (MiniFlex 600, manufactured by Rigaku Corporation). Cu-Kα rays (wavelengths: 1.5405 Å and 1.5444 Å) were used as an X-ray source.

The X-ray diffraction patterns of the negative electrode active materials of Examples 1 to 3 each had both diffraction peaks assigned to the crystal planes of a β phase and diffraction peaks assigned to the crystal planes of a γ phase. That is, each of the negative electrode active materials according to Examples 1 to 3 included both the β phase and the γ phase as crystal phases. The X-ray diffraction pattern of the negative electrode active material of Comparative Example 1 had only diffraction peaks assigned to the crystal planes of a β phase. That is, the negative electrode active material according to Comparative Example 1 included only the β phase.

### [Analysis by ICP Emission Spectroscopy]

The composition ratio of Ti in each of the negative electrode active materials according to Examples 1 to 3 was analyzed using ICP emission spectroscopy. An ICP emission spectrometer (PS3520VDDII, manufactured by Hitachi High-Tech Science Corporation) was used for the analysis. In all of the negative electrode active materials according to Examples 1 to 3, x in compositional formula (1) was 0.05.

### [Measurement of Electronic Conductivity of Negative Electrode Active Material]

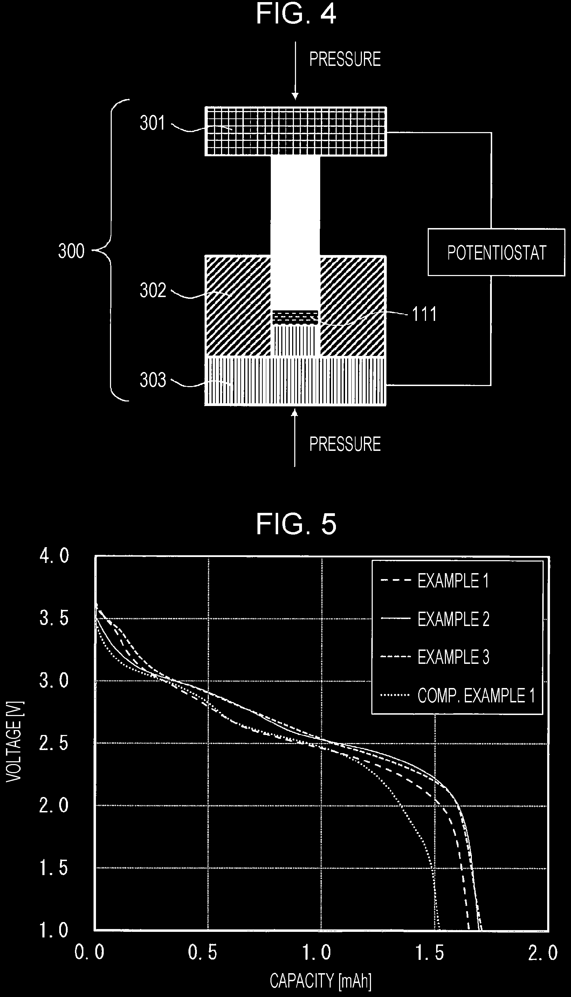

Fig. 4 schematically shows a press molding die 300 used for evaluating the electronic conductivity of a negative electrode active material. The press molding die 300 includes an upper punch portion 301, a die frame 302, and a lower punch portion 303. The die frame 302 is formed of insulating polycarbonate. The upper punch portion 301 and the lower punch portion 303 are both made of stainless steel having an electronic conductivity.

Using the press molding die 300 shown in Fig. 3, the electronic conductivity of each negative electrode active material was measured by the following method.

In a dry atmosphere, powder of the negative electrode active material 111 was filled into the press molding die 300. In the press molding die 300, the powder of the negative electrode active material 111 was compressed between the upper punch portion 301 and the lower punch portion 303, thereby applying a pressure of 720 MPa to the negative electrode active material 111. While maintaining the application of pressure, the upper punch portion 301 and the lower punch portion 303 were each connected to a potentiostat (VersaSTAT4, manufactured by Princeton Applied Research) equipped with a frequency response analyzer. The upper punch portion 301 was connected to a working electrode and a potential measuring terminal. The lower punch portion 303 was connected to a counter electrode and a reference electrode.

A voltage was applied to the working electrode relative to the reference electrode, and the current value was read. By plotting the electric current over a change in the potential, a graph of I-V characteristics was obtained, and the electronic conductivity was determined from the slope of the graph. For each of the negative electrode active materials of Examples 1 to 3 and Comparative Example 1, the electronic conductivity was measured, as the negative electrode active material 111 of Fig. 3, at room temperature using the press molding die 300. The measurement of the electronic conductivity was performed on the negative electrode active material 111 which did not contain a coating, such as carbon, or a conductive additive as described above. Table 1 shows the measurement results of the electronic conductivities of the negative electrode active materials of Examples 1 to 3 and Comparative Example 1.

### [Diffusion Coefficient]

For secondary batteries according to Examples 1 to 3 and Comparative Example 1, their diffusion coefficients of Li ions were determined by a galvanostatic intermittent titration technique. Table 1 shows the diffusion coefficients of Li ions for Examples 1 to 3 and Comparative Example 1.

### [Production of Negative Electrode]

Li₃PS₄ (hereinafter referred to as "LPS") was prepared as a solid electrolyte. The negative electrode active material according to Example 1 was prepared as a negative electrode active material. LPS, the negative electrode active material, a conductive additive, a solvent containing a binder, and an organic solvent were added to a polypropylene container, and these materials were stirred by means of an ultrasonic homogenizer. The resulting negative electrode slurry was applied to a current collector foil to form a coating film. The current collector foil having the coating film was placed on a hot plate, and the organic solvent was removed from the coating film in an argon atmosphere to obtain a negative electrode. The negative electrode was dried by performing pre-drying at 70°C for 20 minutes, and then performing main drying at 110°C for 30 minutes.

### [Production of Positive Electrode]

LPS was prepared as a solid electrolyte. Lithium nickel cobalt aluminum oxide (hereinafter referred to as "NCA") was prepared as a positive electrode active material. LPS, NCA, a conductive additive, a solvent containing a binder, and an organic solvent were added to a polypropylene container, and these materials were stirred by means of an ultrasonic homogenizer. The resulting positive electrode slurry was applied to a current collector foil to form a coating film. The current collector foil having the coating film was placed on a hot plate, and the organic solvent was removed from the coating film in an argon atmosphere to obtain a positive electrode. The positive electrode was dried by performing pre-drying at 70°C for 20 minutes, and then performing main drying at 120°C for 30 minutes.

### [Production of Secondary Battery]

In an insulating cylindrical casing, a sulfide solid electrolyte Li₂S-P₂S₅ in an amount corresponding to a thickness of 550 µm (80 mg) and a positive electrode were stacked in this order. The positive electrode, after being produced as described above, was punched into a size of φ9.2 mm and stacked onto the sulfide solid electrolyte. Next, a negative electrode was stacked onto the opposite side of the solid electrolyte layer from the positive electrode. The negative electrode, after being produced as described above, was punched into a size of φ9.2 mm and stacked onto the sulfide solid electrolyte layer. The positive electrode and the negative electrode were combined such that the theoretical capacity of the negative electrode was 1.2 times the theoretical capacity of the positive electrode. The resulting stack was pressed and molded at a pressure of 80 MPa, thereby producing a laminate consisting of the positive electrode, the solid electrolyte layer, and the negative electrode.

Next, a stainless-steel current collector was attached to each of the positive electrode and the negative electrode, and a current collector lead was attached to each of the current collectors.

Finally, the interior of the insulating cylindrical casing was isolated from the external atmosphere using an insulating ferrule, thereby sealing the interior of the casing. The battery of Example 1 was thus produced. The batteries of Example 2, Example 3, and Comparative Example 1 were produced in the same manner as in Example 1.

### [Charge-Discharge Test]

The batteries of Examples 1 to 3 and Comparative Example 1 were placed in a thermostatic chamber maintained at 25°C. Each battery was charged at a constant current at a rate of 0.05 C (20-hour rate) based on the theoretical capacity of the battery. The end-of-charge voltage was 3.6 V. Next, each battery was discharged at a current rate of 0.05 C until the voltage reached 1.0 V.

Fig. 5 shows the results of the charge-discharge test for the batteries of Examples 1 to 3 and Comparative Example 1. Table 1 shows the discharge capacities at 0.05 C and the charge-discharge efficiencies, measured in the charge-discharge test. The charge-discharge efficiencies were each determined by measuring the charge capacity during charging and the discharge capacity during discharging, and calculating the ratio of the discharge capacity to the charge capacity.

**[Table 1]**

| | Composition | Crystal structure | Theoretical capacity (mAh/g) | Electronic conductivity (S/cm) | Diffusion coefficient (cm²/sec) | Discharge capacity (mAh) | Charge-discharge efficiency (%) |
|---|---|---|---|---|---|---|---|
| Example 1 | Li_{3.05}Ti_{0.05}V_{0.95}O₄ | Mixed phase of β phase and γ phase | 384 | 8.0E-11 | 4.87E-10 | 1.65 | 85.3 |
| Example 2 | Li_{3.05}Ti_{0.05}V_{0.95}O₄ | Mixed phase of β phase and γ phase | 384 | 5.3E-10 | 6.65E10 | 1.71 | 86.2 |
| Example 3 | Li_{3.05}Ti_{0.05}V_{0.95}O₄ | Mixed phase of β phase and γ phase | 384 | 4.2E-10 | 4.64E-10 | 1.70 | 87.8 |
| Comp. Example 1 | Li₃VO₄ | Single β phase | 394 | 6.7E-13 | 9.00E-11 | 1.52 | 76.5 |

### (Discussion)

As indicated by the results of Examples 1 to 3, the negative electrode active materials including a mixed phase of a β phase and an α phase exhibited a high electronic conductivity and a high diffusion coefficient. The batteries each using such a negative electrode active material exhibited a high discharge capacity and a high charge-discharge efficiency.

The negative electrode active material of Comparative Example 1 included only a β phase. Therefore, the negative electrode active material of Comparative Example 1 exhibited a low electronic conductivity and a low diffusion coefficient. The battery using such a negative electrode active material exhibited a low discharge capacity and a low charge-discharge efficiency.

As indicated by the results of Examples 1 to 3 and Comparative Example 1, when the electronic conductivity of the negative electrode active material was greater than 6.7 × 10⁻¹³ S/cm, the battery using the negative electrode active material had a charge-discharge efficiency of greater than 76.5%.

As described hereinabove, the negative electrode active material of the present disclosure exhibits a high electronic conductivity, and a battery including the negative electrode active material in the negative electrode is appropriate for improving charge-discharge efficiency.

### Industrial Applicability

The negative electrode active material and the battery of the present disclosure can be used, for example, in a lithium-ion secondary battery.

### Reference Signs List

100 negative electrode material
111 negative electrode active material
112 solid electrolyte
113 conductive additive
101, 201 positive electrode
102, 202 electrolyte layer
103, 203 negative electrode
212 first electrolyte layer
222 second electrolyte layer
300 press molding die
301 upper punch portion
302 die frame
303 lower punch portion
1000, 2000 battery

## Claims

1. A negative electrode active material comprising Li, V, M, and O,
wherein M is at least one selected from tetravalent metal elements, excluding V, and tetravalent metalloid elements, and
wherein the electronic conductivity is greater than or equal to 7.0 × 10⁻¹³ S/cm.

2. The negative electrode active material according to claim 1, having a composition represented by Li₃₊ₓV₁₋ₓMₓO₄, where 0 < x < 1 is satisfied.

3. The negative electrode active material according to claim 2, wherein 0 < x ≤ 0.2 is satisfied.

4. The negative electrode active material according to claim 1, wherein M comprises Ti.

5. The negative electrode active material according to claim 1, wherein the negative electrode active material includes both a β phase and a γ phase as crystal phases.

6. The negative electrode active material according to claim 1, wherein the electronic conductivity is greater than or equal to 8.0 × 10⁻¹¹ S/cm.

7. A battery comprising:
a positive electrode;
a negative electrode including the negative electrode active material according to any one of claims 1 to 6; and
an electrolyte layer disposed between the positive electrode and the negative electrode.

8. The battery according to claim 7, wherein the negative electrode includes a conductive additive.
